# EUROPEAN PATENT SPECIFICATION

(11) **EP 3 516 899 B1**
(45) Date of publication and mention of the grant of the patent: **28.10.2026**
(21) Application number: 17754952.4
(22) Date of filing: 09.08.2017
(51) Int. Cl.: H04W 36/00

(54) **MOBILITY ENHANCEMENTS FOR INTRA-CELL AND INTER-CELL MOBILITY IN WIRELESS COMMUNICATION SYSTEMS**
MOBILITÄTERWEITERUNGEN FÜR INTRAZELL- UND INTERZELLMOBILITÄT IN DRAHTLOSKOMMUNIKATIONSSYSTEMEN
AMÉLIORATIONS DE MOBILITÉ DESTINÉES À UNE MOBILITÉ INTRACELLULAIRE ET INTERCELLULAIRE DANS DES SYSTÈMES DE COMMUNICATION SANS FIL

(30) Priority: 26.09.2016 US 201662399962 P
(43) Date of publication of application: 31.07.2019
(73) Proprietor: Apple Inc., Cupertino, CA 95014 (US)
(72) Inventor: ZHU, Jing, Portland, OR 97229 (US); SINGH, Sarabjot, Santa Clara, CA 94070 (US); YIU, Candy, Portland, OR 97201 (US); HIMAYAT, Nageen, Fremont, CA 94539 (US); ARYAFAR, Ehsan, Santa Clara, CA 95054 (US)
(74) Representative: Greengrass, Matthew James
(86) International application number: PCT/US2017/046154
(87) International publication number: WO 2018/057143

(56) References cited:
- WO-A1-2016/129418
- US-A1- 2012 122 392
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 13)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.4.0, 7 July 2016 (2016-07-07), pages 1 - 314, XP051123307
- NTT DOCOMO INC: "Discussion on CSI-RS configuration for NR RRM measurement in CONNECTED mode", vol. RAN WG1, no. Spokane, USA; 20170403 - 20170407, 25 March 2017 (2017-03-25), XP051252129, Retrieved from the Internet <URL:http://www.3gpp.org/ftp/tsg_ran/WG1_RL1/TSGR1_88b/Docs/> [retrieved on 20170325]

## Description

### Technical Field

Embodiments of the present disclosure generally relate to the field of wireless communication, and more particularly, to mobility enhancements for intra-cell and inter-cell mobility in wireless communication systems.

### Background

Some wireless communication systems may include base stations (e.g., evolved Node Bs (eNBs), next generation Node B (gNBs), Transmission Reception Point (TRPs), or the like) of different cells, and some base stations may form more than one beam. As a result, mobility procedures to support both inter-cell mobility and intra-cell mobility are needed. Inter-cell mobility may include a mobile device (e.g., a user equipment (UE)) moving from one source base station to a target base station of a different cell. Intra-cell mobility may include the mobile device moving from a source beam to a target beam of the same cell, which may include the mobile device moving from a source beam to a target beam of the same base station (intra-BS (base station) mobility) or a different base station of the same cell (inter-BS mobility). Some known mobility procedures for intra-cell mobility or inter-cell mobility may result in too much latency.

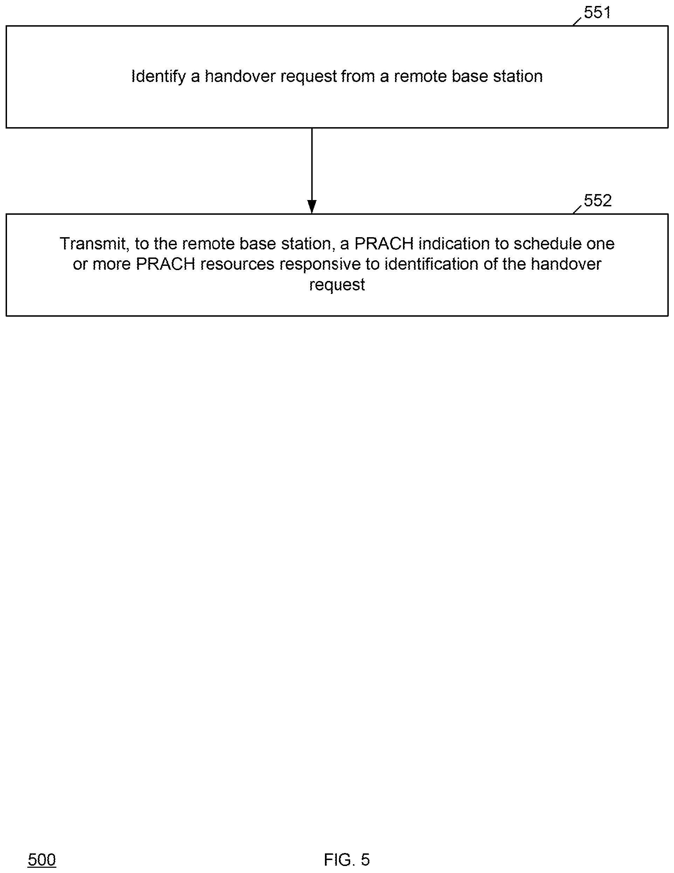

WO 2016/129418 is directed to a radio base station apparatus and a terminal constituting a radio communication system. Figure 5 and corresponding paragraphs disclose transmitting measurement timing information to the terminal by Radio Resource Control message (step S102). The measurement data contains either beam identifiers or measurement timing depending on whether the mobile device has been configured with the mapping between transmission timing and beam identifiers. At step S108, a determination unit determines a beam pattern to be used for communication with the terminal based on the measurement result.

"3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 13)" shows, at Figure 10.1.2.1.1-1, a handover request being transmitted from a source eNB to a target eNB at step 4. Step 6 shows a handover request acknowledgement from the target eNB to the source eNB. As discussed at step 6 on page 93, the handover request acknowledgement includes a transparent container to be sent to the UE as an RRC message to perform the handover. The container may include a dedicated RACH preamble.

US-A1-2012/122392 describes a communication apparatus and a communication method, a computer program, and a communication system which perform radio communication by using millimeter waves and which extends the communication distance of millimeter waves by directing the beam of a directional antenna in the direction in which the communicating party is positioned.

### Summary of the invention

The invention is set out in the appended set of claims.

### Brief Description of the Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
FIG. 1 illustrates a system for mobility enhancements based on measurement reporting in accordance with various embodiments.
FIG. 2 illustrates operations that may be performed by the mobile device of FIG. 1 in accordance with various embodiments.
FIG. 3 illustrates operations that may be performed by the base station of the source cell of FIG. 1 in accordance with various embodiments.
FIG. 4 illustrates a system for mobility enhancements based on a Physical Random Access Channel (PRACH) indicator in accordance with various embodiments.
FIG. 5 illustrates operations that may be performed by the base station of the target cell of FIG. 4 in accordance with various embodiments.
FIG. 6 illustrates a system for mobility enhancements for fast cell switching in accordance with various embodiments.
FIG. 7 illustrates operations that may be performed by the mobile device of FIG. 6 in accordance with various embodiments.
FIG. 8 illustrates electronic devices that may be utilized in accordance with various embodiments.

### Detailed Description

Various aspects of the illustrative embodiments will be described using terms commonly employed by those skilled in the art to convey the substance of their work to others skilled in the art. However, it will be apparent to those skilled in the art that alternate embodiments may be practiced with only some of the described aspects. For purposes of explanation, specific numbers, materials, and configurations are set forth in order to provide a thorough understanding of the illustrative embodiments. However, it will be apparent to one skilled in the art that alternate embodiments may be practiced without the specific details. In other instances, well-known features are omitted or simplified in order not to obscure the illustrative embodiments.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

The phrase "in some embodiments" is used repeatedly. The phrase generally does not refer to the same embodiments; however, it may. The terms "comprising," "having," and "including" are synonymous, unless the context dictates otherwise.

The phrases "A or B," "A/B," and "A and/or B" mean (A), (B), or (A and B).

As used herein, the term "circuitry" refers to, is part of, or includes hardware components such as an application specific integrated circuit (ASIC), an electronic circuit, a logic circuit, a processor (shared, dedicated, or group) and/or memory (shared, dedicated, or group) that are configured to provide the described functionality. In some embodiments, the circuitry may execute one or more software or firmware programs to provide at least some of the described functionality. In some embodiments, the circuitry may be implemented in, or functions associated with the circuitry may be implemented by, one or more software or firmware modules. Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non- exhaustive list) of the computer- readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer- usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc. In some embodiments, circuitry may include logic, at least partially operable in hardware, to perform the described operations.

Illustrative embodiments of the present disclosure include, but are not limited to, methods, systems, computer-readable media, and apparatuses that may be associated with mobility enhancements for intra-cell mobility and inter-cell mobility in wireless communication systems, such as 5G millimeter wave (mmWave) Access system. Some embodiments may include mobility enhancements based on measurement reporting. Some embodiments may include mobility enhancements based on transmission of a Physical Random Access Channel (PRACH) indicator. Some embodiments may include mobility enhancements for Fast Cell Switching (FCS) for a mobile device connected to multiple cells simultaneously.

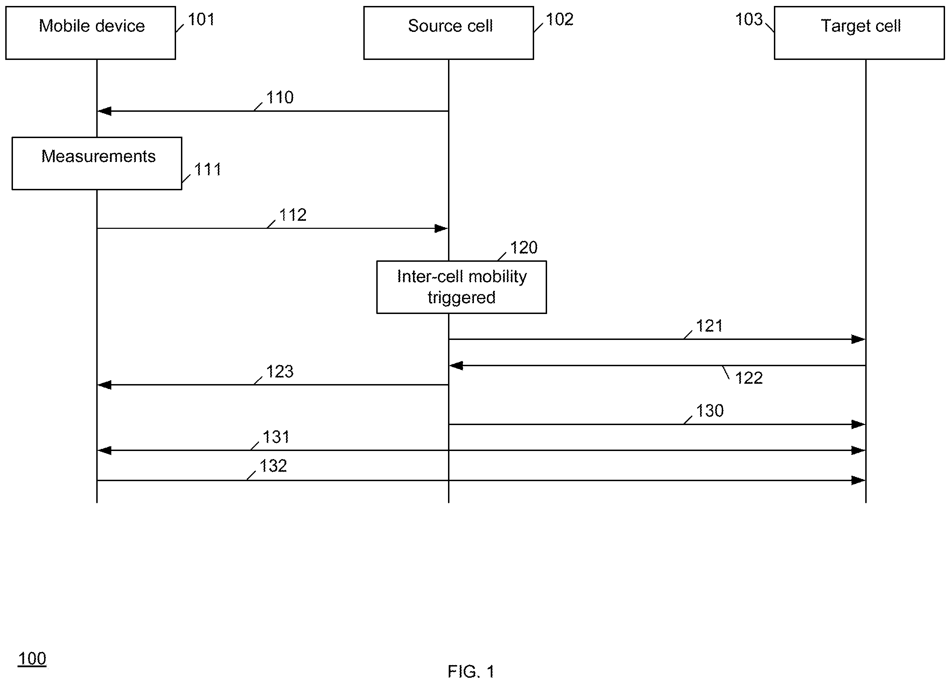

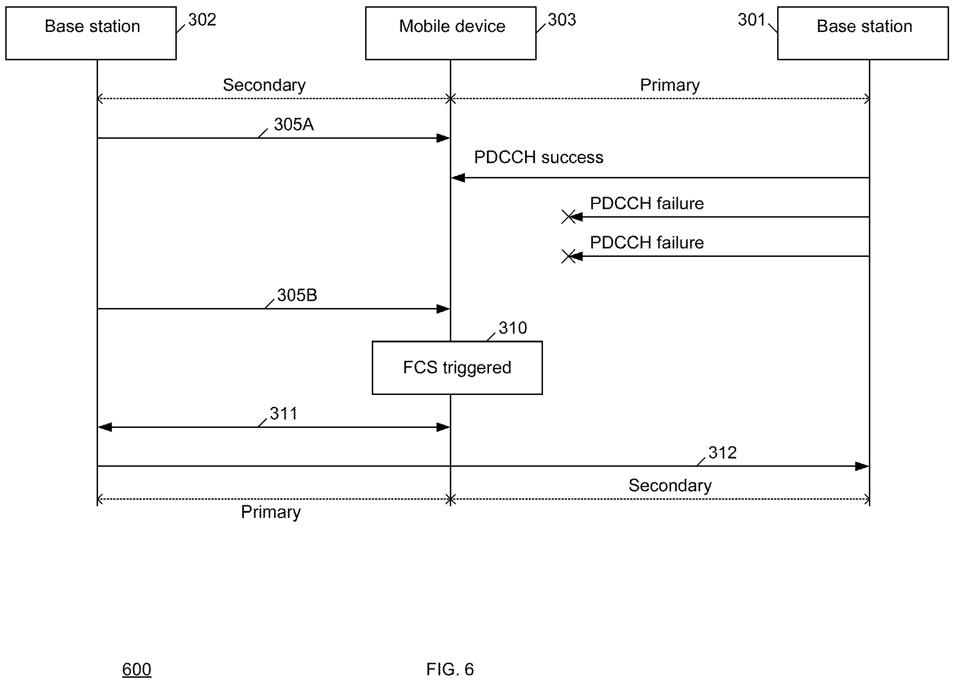

The invention is best understood with reference to Figures 1-5 and 8. Parts of the description relating to Figures 6-7 are not part of the invention but are disclosed for illustrative purposes.

### Mobility Enhancements Based on Measurement Reporting

In embodiments, a synchronization signal (e.g., Primary Synchronization Signal (PSS), Secondary Synchronization Signal (SSS), a 5G mmWave cell synchronization signal (SS), or the like) or a reference signal (e.g., Channel State Information - Reference Signal (CSI-RS) may rely on base station radio frequency (RF) beamforming, to achieve the desirable link budget, and a beam-formed synchronization signal or reference signal symbol (for mobility measurements) may be mapped to the base station beam identifier (ID). Moreover, in embodiments, neighboring cells coordinates may be used to synchronize timing at the symbol level.

A source base station and a target base station may be synchronized at the symbol level. As a result, the timing offset between the two may be always less than one symbol. If a synchronization burst (e.g., an SS burst) at the target base station consists of N symbols, the measurement gap at the source base station may be expected to be N+1 symbols. During a synchronization burst, a base station may sweep transmit sectors (e.g., transmission (TX) RF beams) of the base station or send the signal over the same sector repeatedly to allow a mobile device to sweep receive sectors (reception (RX) RF beams) of the mobile device. Regardless, the mobile device may synchronize with a target base station and measure Reference Signal Received Power (RSRP) during the measurement gap. In addition, the mobile device may also collect resource allocation information (e.g., time and frequency information) of the reference signals used for the RSRP measurements.

If there is only one synchronization burst in a frame and only one base station beam is used in the synchronization burst, a Frame Number (FN) may be used to uniquely identify the RSRP measurement time. Otherwise, the combination of FN, Subframe Index, and Symbol Index may be used to identify the RSRP measurement time. In addition, the base station may also multiplex beams in frequency. Thus, a Sub-band Index is used to indicate the frequency/band information for the RSRP measurement.

The time or frequency information is included in a message, e.g., a measurements report message, during inter-cell mobility. The message may include an RSRP measurement time, which may be the starting time of a symbol used to measure RSRP in the measurement report. The message includes frequency information, e.g., RSRP measurement frequency information. The frequency information may include an RSRP sub-band, which may be the index of the sub-band used to measure RSRP in the measurement report.

Any format may be used for reporting the time or frequency information. The format may include a Type 1 format, which may specify frame number. The format may include a Type 2 format, which may specify frame number and subframe number. The format may include a Type 3 format, which may specify frame number, subframe index, and symbols index.

The source base station explicitly indicates which format to use in a control message, e.g., a measurement control message, to the target base station. In some embodiments, a selected format (e.g., the Type 3 format) of more than one format may be used as a default format. In such embodiments, when no explicit signal is provided by the source base station, the mobile device may use the default format. An explicit signal (such as a flag) may be used by the source base station to select a different format of the more than one formats.

FIG. 1 illustrates a system 100 for mobility enhancements based on measurement reporting in accordance with various embodiments. A base station of a source cell 102 transmits a measurement control message 110 to the mobile device 101. The measurement control message 110 indicates an RSRP measurement time format or RSRP measurement frequency format. For instance, the measurement control message 110 may include a flag that, if set, specifies a predetermined format (when the flag is not set, a default format may be indicated).

The mobile device 101 performs measurements 111, and transmits a measurement report 112. The measurement report 112 includes an RSRP measurement time based on the RSRP measurement time format or RSRP measurement frequency information (e.g., sub-band information) based on the RSRP measurement frequency format.

The RSRP measurement time or the RSRP measurement frequency information may be usable to correlate a measurement of the measurement report to a beam of a plurality of beams received by a mobile device from a target base station. In an embodiment to support inter-cell mobility, the base station of the source cell 102 may transmit a handover request 121 to the base station of the target cell 103 in response to inter-cell mobility triggered 120. In some embodiments, the base station of the source cell 102 may provide the RSRP measurement time or RSRP measurement frequency information to the base station of the target cell 103 (e.g., may insert the RSRP measurement time or RSRP measurement frequency information into the handover request 121), so that the base station of the target cell 103 may identify a best beam for the mobile device 101. Additional communications may be performed as illustrated to complete a handover. For instance, the base station of the target cell 103 may respond with a handover request acknowledgement 122. The base station of the source cell 102 may transmit a Radio Resource Control (RRC) connection reconfiguration 123. The mobile device 101 and the base station of the target cell 103 may perform random access 131 after Sequence Number (SN) Status Transfer 130, and the mobile device 101 may transmit an RRC connection reconfiguration complete message 132.

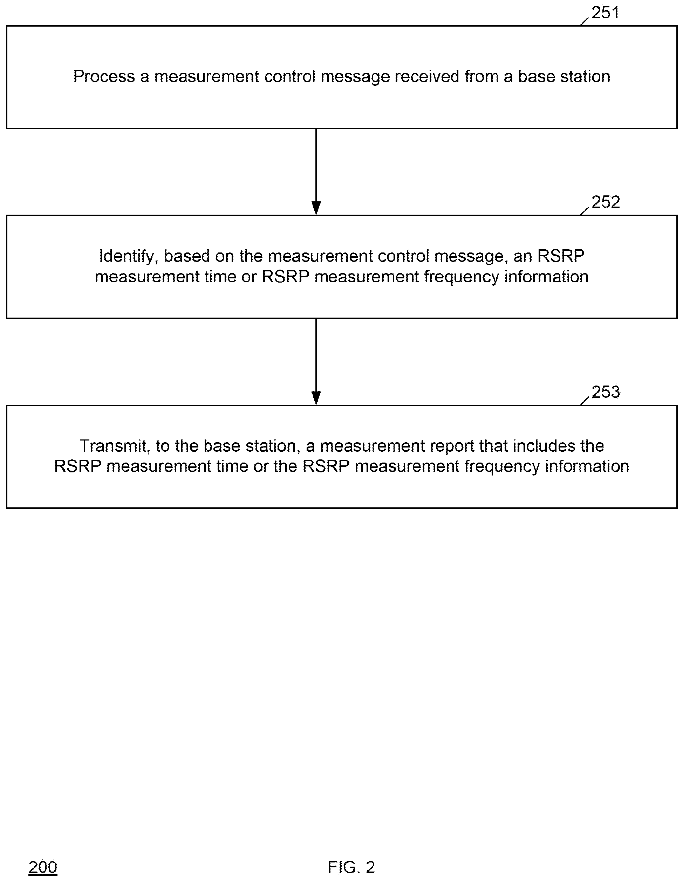

FIG. 2 illustrates operations of a process 200 that is performed by the mobile device of FIG. 1 in accordance with various embodiments. In block 251, the mobile device processes a measurement control message received from a base station. In block 252, the mobile device identifies, based on the measurement control message, an RSRP measurement time or RSRP measurement frequency information. In block 253, the mobile device transmits, to the base station, a measurement report that includes the RSRP measurement time or RSRP measurement frequency information.

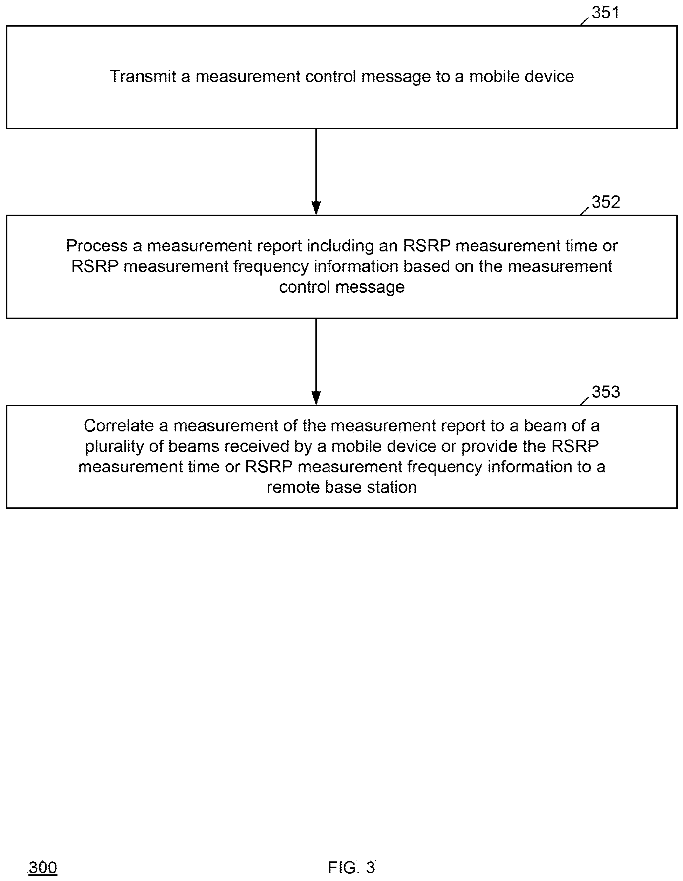

FIG. 3 illustrates operations of a process 300 that is performed by the base station of the source cell of FIG. 1 in accordance with various embodiments. In block 351, the base station transmits a measurement control message to a mobile device. In block 352, the base station processes a measurement report including an RSRP measurement time or RSRP measurement frequency information based on the measurement control message.

In block 353, the base station may correlate a measurement of the measurement report to a beam of a plurality of beams received by mobile device or provide information about the RSRP measurement time or RSRP measurement frequency information to a remote base station (e.g., a base station of a target cell). In some examples, this may include the base station transmitting the RSRP measurement time or RSRP measurement frequency information in a handover request to the base station of the target cell.

### Mobility Enhancements Based on PRACH allocation

In embodiments, an allocation of Physical Random Access Channel (PRACH) (e.g., a dynamic or dedicated PRACH allocation) may be accomplished through explicit downlink (DL) control signaling (e.g., Physical Downlink Control Channel (PDCCH)).

For example, a one-bit indicator (e.g., flag) - "PRACH Indicator" (e.g., Dynamic/Dedicated PRACH Indicator) may be included in PDCCH to indicate if the corresponding UL (uplink) subframe contains PRACH or not. In addition, more information (e.g., symbol number, sub-band index) may also be included in such a message/signaling to specify where a PRACH allocation is scheduled. Alternatively, resource allocation information (e.g. frame number, subframe number, symbol number, sub-band index, or the like, or combinations thereof) may be included in control messages (e.g. RRC messages) to specify where a dynamic or dedicated PRACH allocation is scheduled. In various embodiments, a PRACH allocation may be triggered in inter-cell or intra-cell mobility.

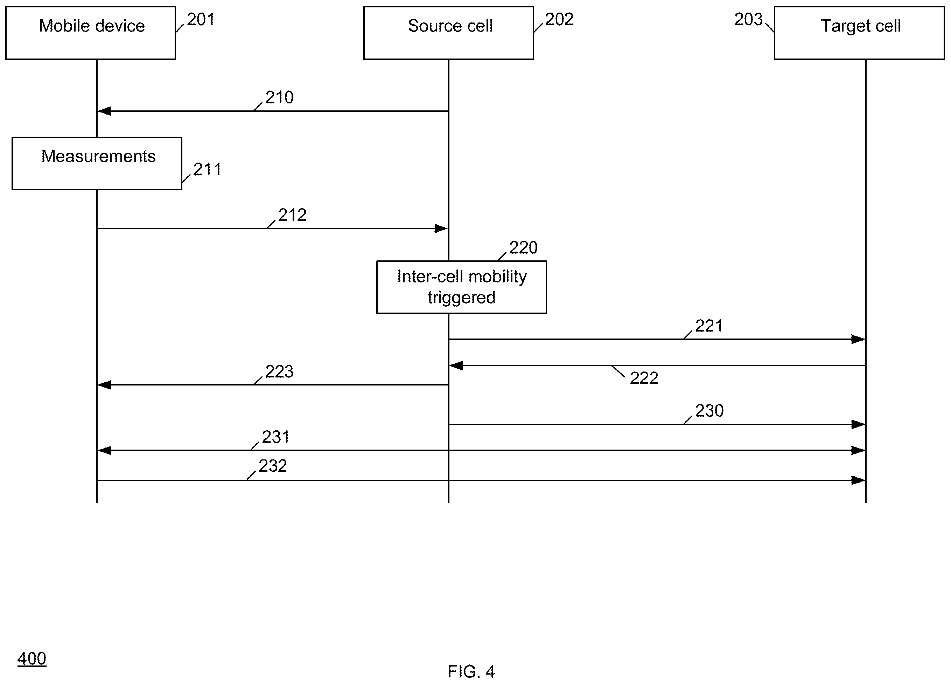

FIG. 4 illustrates a system 400 for mobility enhancements based on a PRACH indicator in accordance with various embodiments. After the base station of the target cell 203 receives the handover request 221, the base station of the target cell 203 may generate the radio resource control (RRC) container with PRACH information including the PRACH indication. The base station of the target cell 203 may send the handover acknowledgement (ACK) 222 to the source base station with the RRC container. The base station of the source cell 202 may then forward the RRC container together with RRC connection reconfiguration message 223. Specifically, during inter-cell mobility 220, the base station of the target cell 203 may schedule PRACH 231 immediately after receiving the "Sequence Number (SN) Status Transfer" message 230 from the base station of the source cell 202. The mobile device 201 may transmit a RRC Connection Reconfiguration complete message 232.

The illustrated example is for inter-cell mobility 220, but mobility enhancements based on a PRACH allocation may also be used for intra-cell. During intra-cell mobility, a mobile device may remain attached to the same cell and there may be no "SN Status Transfer" message. Thus, a target base station of the cells may schedule PRACH allocation immediately after successfully sending out a RRC Connection Reconfiguration message.

Various embodiments of including inter-cell mobility, intra-cell mobility, or UL synchronization without mobility may include an indicator (e.g., a flag) - "Random Access Usage" in the PDCCH or the RRC message, which may indicate if the PRACH allocation may be used for initial access, intra-cell mobility, inter-cell mobility, or UL synchronization without mobility. For example, this field may contain multiple bits, each of which corresponds to a specific usage, respectively. If such flag is not included, the PRACH allocation may be used for any usage.

It should be appreciated that some embodiments may include mobility enhancements based on PRACH allocation and beam information sharing, such as by measurement reporting, although this is not required. Referring again to FIG. 4, the base station of the source cell 202 may send a message control 210, similar to message control 110 (FIG. 1). The mobile device 201 may perform measurements 211 and may transmit a measurement report 212, similar to measurements 111 and measurement report 112 of FIG. 1, respectively. The handover request 221 may be similar to handover request 121 of FIG. 1.

FIG. 5 illustrates operations of a process 500 that is performed by the base station of the target cell of FIG. 4 in accordance with various embodiments. In block 551, the base station identifies a handover request from a remote base station.

In block 552, the base station transmits, to the remote base station, a PRACH indication to schedule one or more PRACH resources (e.g., frequency, time, sequence, or the like, or combinations thereof) responsive to identification of the handover request. The base station may insert the PRACH indication in a handover request acknowledgement for the handover request from the remote base station.

Referring back to block 551, in some examples the base station of the target cell is configured to identify whether the handover request includes any information (e.g., RSRP measurement time or RSRP measurement frequency information) that is used to determine a beam of a plurality of beams received by a mobile device during handover measurements. The base station is further configured to, if the information is present, select a beam of the plurality of beams (e.g., select the best beam) for the PRACH resources associated with the PRACH indication.

### Mobility Enhancements for Fast Cell Switching

In some cases, a mobile device connected to multiple cells simultaneously may switch among them for blockage mitigation. However, in some legacy systems, this may require a mobile device to maintain UL synchronization with all the cells, using periodic scheduling requests.

In contrast, in various embodiments of mobility enhancements for intra-cell or inter-cell mobility in wireless communications a mobile device may no longer need periodic scheduling request from the secondary base stations. Instead, a secondary base station (e.g., second base station 302) may schedule 305A-B PRACH allocations opportunistically (whenever allowed by loading). Unlike using periodic PRACH for initial access, which must cover all possible beam directions, the secondary base station (e.g., second base station 302) may know the best beam direction for each of their attached mobile devices (e.g., mobile device 303), and therefore may schedule 305A-B dynamic or dedicated PRACH over the selected beam directions. Thus, PRACH may require less resources than periodic PRACH, and may occur much more frequently.

FIG. 6 illustrates a system 600 for mobility enhancements for fast cell switching in accordance with various embodiments. In some embodiments using a PRACH based Fast Cell Switching (FCS) procedure, second base station 302 (e.g., a booster base station) may schedule 305A-B PRACH allocations with mobile device 303. Initially, a first base station 301 (e.g., an anchor base station) may be primary, and the second base station 302 may be secondary. The mobile device 303 may use PDCCH or any periodic downlink (DL) control signal from its primary base station (e.g., the first base station 301) as illustrated to detect link loss and trigger 310 FCS. Once FCS is triggered 310, the mobile device 303 may select one of its secondary base stations (e.g., the second base station 302) as its new primary base station based on measurements, e.g., RSRP measurements.

The mobile device 303 may perform random access 311 using the PRACH allocation from the second base station 302, and may send an FCS request (not shown). The second base station 302 may respond with the FCS response message (not shown) to confirm the switching. The second base station 302 may send the FCS notification message 312 to the first base station 301, and the first base station 301 may start forwarding DL traffic (not shown) to the second base station 302 (e.g., the new primary base station).

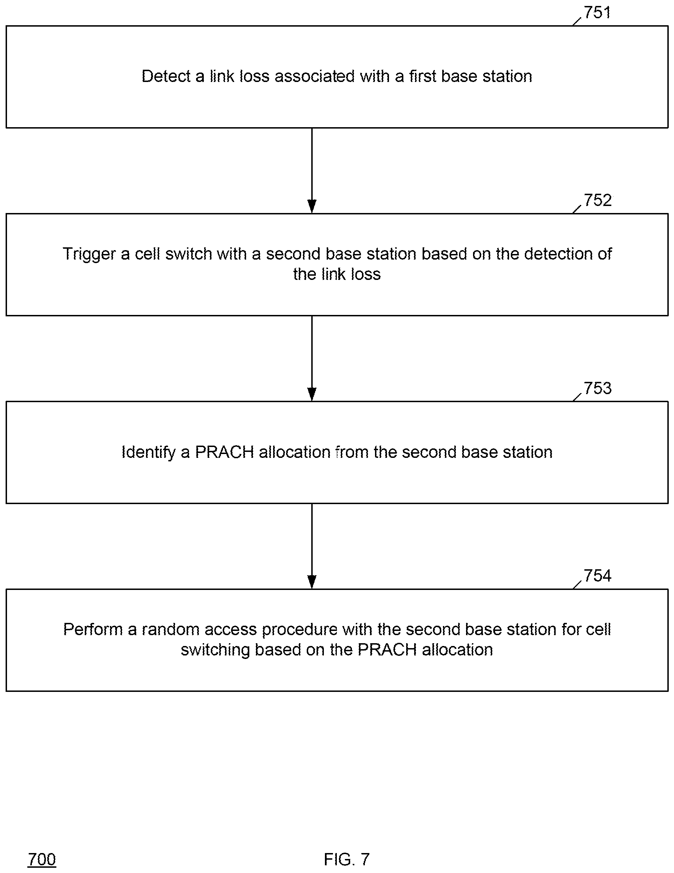

FIG. 7 illustrates operations of a process 700 that may be performed by the mobile device of FIG. 6 in accordance with various embodiments. In block 751, the mobile device may detect a link loss associated with a first base station. In block 752, the mobile device may trigger a cell switch with a second base station based on the detection of the link loss. In block 753, the mobile device may identify a PRACH allocation from the second base station. In block 754, the mobile device may perform a random access procedure with the second base station for cell switching based on the PRACH allocation.

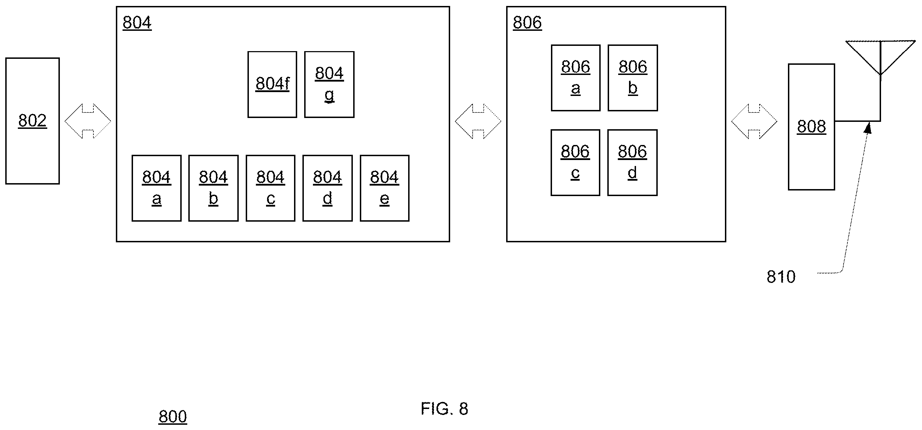

FIG. 8 illustrates an electronic device 800 that may be utilized in accordance with various embodiments. Embodiments described herein may be implemented into a system using any suitably configured hardware and/or software. Figure 8 illustrates, for one embodiment, example components of an electronic device 800. In embodiments, the electronic device 800 may be, implement, be incorporated into, or otherwise be a part of a mobile device (such as any mobile device described in any of FIGS. 1-7), a base station (such as any base station described in any of FIGS. 1-7), or some other electronic device. In some embodiments, the electronic device 800 may include application circuitry 802, baseband circuitry 804, radio frequency (RF) circuitry 806, front-end module (FEM) circuitry 808 and one or more antennas 810, coupled together at least as shown.

RF circuitry 806 may be used to perform any operations described herein with reference to any of FIGS. 1-7 as transmitting/receiving, transmission/reception, or performed by a transmitter/receiver, while baseband circuitry 804 may be used to perform other operations described herein with reference to any of FIGS. 1-7. In a case in which a first base station is to transmit a measurement control message to a mobile device, wherein the measurement control message is to indicate a Reference Signal Received Power (RSRP) measurement time format or a RSRP measurement frequency format; process a measurement report received from the mobile device in response to the measurement control message, wherein the measurement report includes an RSRP measurement time based on the RSRP measurement time format or RSRP measurement frequency information based on the RSRP measurement frequency format; and transmit a handover request to a second base station responsive to the RSRP measurement time or the RSRP measurement frequency information, during operation the RF circuitry 806 performs the transmissions and the baseband circuity 804 performs the processing. In a case in which a mobile device is to process a measurement control message received from a base station, wherein the measurement control message indicates a Reference Signal Received Power (RSRP) measurement time format or a RSRP measurement frequency format; identify, based on the measurement control message, an RSRP measurement time or RSRP measurement frequency information; and transmit, to the base station, a measurement report that includes the RSRP measurement time or the RSRP measurement frequency information, during operation the RF circuitry 806 performs the transmission and the baseband circuitry performs the processing and the identifying.

The application circuitry 802 may include one or more application processors. For example, the application circuitry 802 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 804 may include circuitry such as, but not limited to, one or more single-core or multi-core processors. The baseband circuitry 804 may include one or more baseband processors and/or control logic to process baseband signals received from a receive signal path of the RF circuitry 806 and to generate baseband signals for a transmit signal path of the RF circuitry 806. Baseband processing circuity 804 may interface with the application circuitry 802 for generation and processing of the baseband signals and for controlling operations of the RF circuitry 806. For example, in some embodiments, the baseband circuitry 804 may include a second generation (2G) baseband processor 804a, third generation (3G) baseband processor 804b, fourth generation (4G) baseband processor 804c, and/or other baseband processor(s) 804d for other existing generations, generations in development or to be developed in the future (e.g., fifth generation (5G), 6G, etc.). The baseband circuitry 804 (e.g., one or more of baseband processors 804a-d) may handle various radio control functions that enable communication with one or more radio networks via the RF circuitry 806. The radio control functions may include, but are not limited to, signal modulation/demodulation, encoding/decoding, radio frequency shifting, etc. In some embodiments, modulation/demodulation circuitry of the baseband circuitry 804 may include Fast-Fourier Transform (FFT), precoding, and/or constellation mapping/demapping functionality. In some embodiments, encoding/decoding circuitry of the baseband circuitry 804 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 804 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 804e of the baseband circuitry 804 may be configured to run elements of the protocol stack for signaling of the PHY, MAC, RLC, PDCP and/or RRC layers. In some embodiments, the baseband circuitry may include one or more audio digital signal processor(s) (DSP) 804f. The audio DSP(s) 804f may be include elements for compression/decompression and echo cancellation and may include other suitable processing elements in other embodiments.

The baseband circuitry 804 may further include memory/storage 804g. The memory/storage 804g may be used to load and store data and/or instructions for operations performed by the processors of the baseband circuitry 804. Memory/storage for one embodiment may include any combination of suitable volatile memory and/or non-volatile memory. The memory/storage 804g may include any combination of various levels of memory/storage including, but not limited to, read-only memory (ROM) having embedded software instructions (e.g., firmware), random access memory (e.g., dynamic random access memory (DRAM)), cache, buffers, etc. The memory/storage 804g may be shared among the various processors or dedicated to particular processors.

Components of the baseband circuitry may be suitably combined in a single chip, a single chipset, or disposed on a same circuit board in some embodiments. In some embodiments, some or all of the constituent components of the baseband circuitry 804 and the application circuitry 802 may be implemented together such as, for example, on a system on a chip (SOC).

In some embodiments, the baseband circuitry 804 may provide for communication compatible with one or more radio technologies. For example, in some embodiments, the baseband circuitry 804 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 804 is configured to support radio communications of more than one wireless protocol may be referred to as multi-mode baseband circuitry.

RF circuitry 806 may enable communication with wireless networks using modulated electromagnetic radiation through a non-solid medium. In various embodiments, the RF circuitry 806 may include switches, filters, amplifiers, etc. to facilitate the communication with the wireless network. RF circuitry 806 may include a receive signal path which may include circuitry to down-convert RF signals received from the FEM circuitry 808 and provide baseband signals to the baseband circuitry 804. RF circuitry 806 may also include a transmit signal path which may include circuitry to up- convert baseband signals provided by the baseband circuitry 804 and provide RF output signals to the FEM circuitry 808 for transmission.

**In** some embodiments, the RF circuitry 806 may include a receive signal path and a transmit signal path. The receive signal path of the RF circuitry 806 may include mixer circuitry 806a, amplifier circuitry 806b and filter circuitry 806c. The transmit signal path of the RF circuitry 806 may include filter circuitry 806c and mixer circuitry 806a. RF circuitry 806 may also include synthesizer circuitry 806d for synthesizing a frequency for use by the mixer circuitry 806a of the receive signal path and the transmit signal path. **In** some embodiments, the mixer circuitry 806a of the receive signal path may be configured to down-convert RF signals received from the FEM circuitry 808 based on the synthesized frequency provided by synthesizer circuitry 806d. The amplifier circuitry 806b may be configured to amplify the down-converted signals and the filter circuitry 806c may be a low-pass filter (LPF) or band-pass filter (BPF) configured to remove unwanted signals from the down-converted signals to generate output baseband signals. Output baseband signals may be provided to the baseband circuitry 804 for further processing. **In** some embodiments, the output baseband signals may be zero-frequency baseband signals, although this is not a requirement. **In** some embodiments, mixer circuitry 806a of the receive signal path may comprise passive mixers, although the scope of the embodiments is not limited in this respect.

In some embodiments, the mixer circuitry 806a of the transmit signal path may be configured to up-convert input baseband signals based on the synthesized frequency provided by the synthesizer circuitry 806d to generate RF output signals for the FEM circuitry 808. The baseband signals may be provided by the baseband circuitry 804 and may be filtered by filter circuitry 806c. The filter circuitry 806c may include a low-pass filter (LPF), although the scope of the embodiments is not limited in this respect.

In some embodiments, the mixer circuitry 806a of the receive signal path and the mixer circuitry 806a of the transmit signal path may include two or more mixers and may be arranged for quadrature downconversion and/or upconversion respectively. In some embodiments, the mixer circuitry 806a of the receive signal path and the mixer circuitry 806a of the transmit signal path may include two or more mixers and may be arranged for image rejection (e.g., Hartley image rejection). In some embodiments, the mixer circuitry 806a of the receive signal path and the mixer circuitry 806a may be arranged for direct downconversion and/or direct upconversion, respectively. In some embodiments, the mixer circuitry 806a of the receive signal path and the mixer circuitry 806a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 806 may include analog-to-digital converter (ADC) and digital-to-analog converter (DAC) circuitry and the baseband circuitry 804 may include a digital baseband interface to communicate with the RF circuitry 806.

In some dual-mode embodiments, a separate radio IC circuitry may be provided for processing signals for each spectrum, although the scope of the embodiments is not limited in this respect.

In some embodiments, the synthesizer circuitry 806d may be a fractional-N synthesizer or a fractional N/N+1 synthesizer, although the scope of the embodiments is not limited in this respect as other types of frequency synthesizers may be suitable. For example, synthesizer circuitry 806d may be a delta-sigma synthesizer, a frequency multiplier, or a synthesizer comprising a phase-locked loop with a frequency divider.

The synthesizer circuitry 806d may be configured to synthesize an output frequency for use by the mixer circuitry 806a of the RF circuitry 806 based on a frequency input and a divider control input. In some embodiments, the synthesizer circuitry 806d may be a fractional N/N+1 synthesizer.

In some embodiments, frequency input may be provided by a voltage controlled oscillator (VCO), although that is not a requirement. Divider control input may be provided by either the baseband circuitry 804 or the applications processor 802 depending on the desired output frequency. In some embodiments, a divider control input (e.g., N) may be determined from a look-up table based on a channel indicated by the applications processor 802.

Synthesizer circuitry 806d of the RF circuitry 806 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these
embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 806d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 806 may include an IQ/polar converter.

FEM circuitry 808 may include a receive signal path which may include circuitry configured to operate on RF signals received from one or more antennas 810, amplify the received signals and provide the amplified versions of the received signals to the RF circuitry 806 for further processing. FEM circuitry 808 may also include a transmit signal path which may include circuitry configured to amplify signals for transmission provided by the RF circuitry 806 for transmission by one or more of the one or more antennas 810.

In some embodiments, the FEM circuitry 808 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 806). The transmit signal path of the FEM circuitry 808 may include a power amplifier (PA) to amplify input RF signals (e.g., provided by RF circuitry 806), and one or more filters to generate RF signals for subsequent transmission (e.g., by one or more of the one or more antennas 810.

In some embodiments, the electronic device 800 may include additional elements such as, for example, memory/storage, display, camera, sensor, and/or input/output (I/O) interface.

In some embodiments, the electronic device 800 may be configured to perform one or more processes, techniques, and/or methods as described herein, or portions thereof.

While specific implementations and examples are described herein for illustrative purposes, various modifications are possible, provided that they do not depart from the scope of the claims.

## Claims

1. A first base station, comprising:
radio frequency, RF, circuitry (806) configured to transmit a measurement control message (351) to a mobile device, wherein the measurement control message is to indicate a Reference Signal Received Power, RSRP, measurement time format, wherein the RSRP measurement time format indicates whether a RSRP measurement time is to be specified by a frame number, a combination of frame number and subframe number, or a combination of frame number, subframe index, and symbol index; and
baseband circuitry (804) configured to process (352) a measurement report received from the mobile device in response to the measurement control message, wherein the measurement report includes an RSRP measurement time based on the RSRP measurement time format;
wherein the RF circuitry (806) is configured to transmit (353) a handover request to a second base station responsive to the RSRP measurement time, wherein the handover request includes the RSRP measurement time.

2. The first base station of claim 1, wherein the RSRP measurement time correlates a measurement of the measurement report to a beam of a plurality of beams received by the mobile device (353).

3. The first base station of any of claims 1-2, wherein the baseband circuitry (804) is configured to identify a Physical Random Access Channel, PRACH, indication in a handover request acknowledgement from the second base station responsive to transmission of the handover request.

4. A mobile device, comprising:
baseband circuitry (804) configured to:
process (251) a measurement control message received from a base station, wherein the measurement control message indicates a Reference Signal Received Power, RSRP, measurement time format, wherein the RSRP measurement time format indicates whether a measurement time is to specified by a frame number, a combination of frame number and subframe number, or a combination of frame number, subframe index, and symbol index; and
identify (252), based on the RSRP measurement time format indicated by the measurement control message, an RSRP measurement time; and
radio frequency, RF, circuitry (806) configured to transmit (253), to the base station, a measurement report that includes the RSRP measurement time.

5. The mobile device of claim 4, wherein the RSRP measurement time correlates a measurement of the measurement report to a beam of a plurality of beams received by the mobile device.

6. The mobile device of claim 4, wherein baseband circuitry (804) is configured to identify a Physical Random Access Channel, PRACH, indication of information forwarded, by the base station, from a base station of a target cell of a handover.

7. A first base station, comprising:
baseband circuitry (804) configured to identify a handover request (551) from a second base station; and
radio frequency, RF, circuitry (806) configured to
transmit (552), to the second base station, a Physical Random Access Channel, PRACH, indication to schedule one or more PRACH resources responsive to identification of the handover request;
transmit, to the second base station, handover request acknowledgement responsive to the identification of the handover request, wherein the PRACH indication is inserted in the handover request acknowledgement, wherein the handover request includes a Reference Signal Received Power, RSRP, measurement time,
wherein the baseband circuitry (804) is configured to
use the RSRP measurement time to determine a beam of a plurality of beams received by a mobile device during handover measurements; and
select a beam of the plurality of beams for the PRACH resources associated with the PRACH indication.

8. The first base station of claim 7, wherein the first base station is configured to:
identify a Sequence Number, SN, status transfer message from the second base station; and
schedule the one or more PRACH resources immediately after receipt of the SN status transfer message.

9. The first base station of claim 7, wherein the first base station is configured to generate a Radio Resource Control, RRC, container to be forwarded by the second base station to a mobile device, wherein the PRACH indication is inserted into the RRC container to cause the PRACH indication to be forwarded with the RRC container to the mobile device.

## Patentansprüche

1. Eine erste Basisstation, umfassend:
eine Funkfrequenz-, RF-, Schaltung (806), die konfiguriert ist, um eine Messungssteuerungsnachricht (351) an eine mobile Vorrichtung zu übertragen, wobei die Messungssteuerungsnachricht ein Referenzsignalempfangsleistungs-, RSRP-, Messungszeitformat anzeigen soll, wobei das RSRP-Messungszeitformat anzeigt, ob eine RSRP-Messungszeit durch eine Rahmennummer, eine Kombination aus Rahmennummer und Unterrahmennummer oder eine Kombination aus Rahmennummer, Unterrahmenindex und Symbolindex spezifiziert werden soll; und
eine Basisbandschaltung (804), die konfiguriert ist, um einen Messungsbericht zu verarbeiten (352), der von der mobilen Vorrichtung als Reaktion auf die Messungssteuerungsnachricht empfangen wird,
wobei der Messungsbericht eine RSRP-Messungszeit basierend auf dem RSRP-Messungszeitformat beinhaltet;
wobei die RF-Schaltung (806) konfiguriert ist, um eine Übergabeanforderung an eine zweite Basisstation als Reaktion auf die RSRP-Messungszeit zu übertragen (353), wobei die Übergabeanforderung die RSRP-Messungszeit beinhaltet.

2. Die erste Basisstation nach Anspruch 1, wobei die RSRP-Messungszeit eine Messung des Messungsberichts mit einem Strahl einer Vielzahl von Strahlen korreliert, die von der mobilen Vorrichtung (353) empfangen werden.

3. Die erste Basisstation nach einem der Ansprüche 1-2, wobei die Basisbandschaltung (804) konfiguriert ist zum Identifizieren einer Anzeige eines physikalischen Direktzugriffskanals, PRACH, in einer Übergabeanforderungsbestätigung von der zweiten Basisstation als Reaktion auf die Übertragung der Übergabeanforderung.

4. Eine mobile Vorrichtung, umfassend:
eine Basisbandschaltung (804), die konfiguriert ist zum:
Verarbeiten (251) einer Messungssteuerungsnachricht, die von einer Basisstation empfangen wird, wobei die Messungssteuerungsnachricht ein Referenzsignalempfangsleistungs-, RSRP-, Messungszeitformat anzeigt, wobei das RSRP-Messungszeitformat anzeigt, ob eine Messungszeit durch eine Rahmennummer, eine Kombination aus Rahmennummer und Unterrahmennummer oder eine Kombination aus Rahmennummer, Unterrahmenindex und Symbolindex spezifiziert werden soll; und
Identifizieren (252), basierend auf dem RSRP-Messungszeitformat, das durch die Messungssteuerungsnachricht angezeigt wird, einer RSRP-Messungszeit; und
eine Funkfrequenz-, RF-, Schaltung (806), die konfiguriert ist, um an die Basisstation einen Messungsbericht zu übertragen (253), der die RSRP-Messungszeit beinhaltet.

5. Die mobile Vorrichtung nach Anspruch 4, wobei die RSRP-Messungszeit eine Messung des Messungsberichts mit einem Strahl einer Vielzahl von Strahlen korreliert, die von der mobilen Vorrichtung empfangen werden.

6. Die mobile Vorrichtung nach Anspruch 4, wobei die Basisbandschaltung (804) konfiguriert ist zum Identifizieren einer Anzeige eines physikalischen Direktzugriffskanals, PRACH, von Information, die durch die Basisstation von einer Basisstation einer Zielzelle einer Übergabe weitergeleitet wird.

7. Eine erste Basisstation, umfassend:
eine Basisbandschaltung (804), die konfiguriert ist zum Identifizieren einer Übergabeanforderung (551) von einer zweiten Basisstation,
eine Funkfrequenz-, RF-, Schaltung (806), die konfiguriert ist zum
Übertragen (552), an die zweite Basisstation, einer Anzeige eines physikalischen Direktzugriffskanals, PRACH, zum Planen einer oder mehrerer PRACH-Ressourcen als Reaktion auf die Identifizierung der Übergabeanforderung;
Übertragen, an die zweite Basisstation, einer Übergabeanforderungsbestätigung als Reaktion auf die Identifizierung der Übergabeanforderung, wobei die PRACH-Anzeige in die Übergabeanforderungsbestätigung eingefügt wird, wobei die Übergabeanforderung eine Referenzsignalempfangsleistungs-, RSRP-, Messungszeit beinhaltet, wobei die Basisbandschaltung (804) konfiguriert ist, um die RSRP-Messungszeit zu verwenden, um einen Strahl einer Vielzahl von Strahlen zu bestimmen, die von einer mobilen Vorrichtung während Übergabemessungen empfangen werden; und Auswählen eines Strahls der Vielzahl von Strahlen für die PRACH-Ressourcen, die mit der PRACH-Anzeige assoziiert sind.

8. Erste Basisstation nach Anspruch 7, wobei die erste Basisstation konfiguriert ist zum:
Identifizieren einer Sequenznummer-, SN-, Statustransfernachricht von der zweiten Basisstation; und
Planen der einen oder mehreren PRACH-Ressourcen unmittelbar nach dem Empfang der SN-Statustransfernachricht.

9. Erste Basisstation nach Anspruch 7, wobei die erste Basisstation konfiguriert ist, um einen Funkressourcensteuerungs-, RRC-, Container zu erzeugen, der von der zweiten Basisstation an eine mobile Vorrichtung weitergeleitet werden soll, wobei die PRACH-Anzeige in den RRC-Container eingefügt wird, um zu bewirken, dass die PRACH-Anzeige mit dem RRC-Container an die mobile Vorrichtung weitergeleitet wird.

## Revendications

1. Une première station de base, comprenant :
une circuiterie radiofréquence, RF, (806) configurée pour transmettre à un dispositif mobile un message de contrôle de mesure (351), le message de contrôle de mesure servant à indiquer un format de temps de mesure de puissance reçue de signal de référence, RSRP, le format de temps de mesure de RSRP indiquant si un temps de mesure de RSRP doit être spécifié par un numéro de trame, une combinaison d'un numéro de trame et d'un numéro de sous-trame, ou bien par une combinaison d'un numéro de trame, d'un index de sous-trame et d'un index de symbole ; et
une circuiterie de bande de base (804) configurée pour traiter (352) un rapport de mesure reçu en provenance du dispositif mobile en réponse au message de contrôle de mesure, le rapport de mesure indiquant un temps de mesure RSRP basé sur le format de temps de mesure RSRP ;
dans laquelle la circuiterie RF (806) est configurée pour transmettre (353) une requête de handover à une seconde station de base en réponse au temps de mesure RSRP, la requête de handover incluant le temps de mesure RSRP.

2. La première station de base de la revendication 1, dans laquelle le temps de mesure RSRP corrèle une mesure du rapport de mesure à un faisceau d'une pluralité de faisceaux reçus par le dispositif mobile (353).

3. La première station de base de l'une des revendications 1 à 2, dans laquelle la circuiterie de bande de base (804) est configurée pour identifier une indication de canal d'accès aléatoire physique, PRACH, dans un accusé de réception de requête de handover provenant de la seconde station de base en réponse à la transmission de la requête de handover.

4. Un dispositif mobile, comprenant :
une circuiterie de bande de base (804) configurée pour :
traiter (251) un message de contrôle de mesure reçu en provenance d'une station de base, le message, le message de contrôle de mesure indiquant un format de temps de mesure de puissance reçue de signal de référence, RSRP, le format de temps de mesure de RSRP indiquant si un temps de mesure de RSRP doit être spécifié par un numéro de trame, une combinaison d'un numéro de trame et d'un numéro de sous-trame, ou bien par une combinaison d'un numéro de trame, d'un index de sous-trame et d'un index de symbole ; et
identifier (252), sur la base du format de temps de mesure RSRP indiqué par le message de contrôle de mesure, un temps de mesure RSRP ; et
une circuiterie radiofréquence, RF, (806) configurée pour transmettre (253), à la station de base, un rapport de mesure qui inclut le temps de mesure RSRP.

5. Le dispositif mobile de la revendication 4, dans lequel le temps de mesure RSRP corrèle une mesure du rapport de mesure à un faisceau d'une pluralité de faisceaux reçus par le dispositif mobile.

6. Le dispositif mobile de la revendication 4, dans lequel la circuiterie de bande de base (804) est configurée pour identifier une indication d'information de canal d'accès aléatoire physique, PRACH, transférée, par la station de base, depuis une station de base d'une cellule cible d'un handover.

7. Une première station de base, comprenant :
une circuiterie de bande de base (804) configurée pour identifier une requête de handover (551) en provenance d'une seconde station de base ; et
une circuiterie radiofréquence, RF, (806) configurée pour :
transmettre (552), à la seconde station de base, une indication de canal d'accès aléatoire physique, PRACH,
pour planifier une ou plusieurs ressources PRACH en réponse à l'identification de la requête de handover ;
transmettre, à la seconde station de base, un accusé de réception de requête de handover en réponse à l'identification de la requête de handover,
l'indication PRACH étant insérée dans l'accusé réception de requête de handover, la requête de handover incluant un temps de mesure de puissance reçu de signal de référence, RSRP,
dans laquelle la circuiterie de bande de base (804) est configurée pour :
utiliser le temps de mesure RSRP pour déterminer un faisceau d'une pluralité de faisceaux reçus par un dispositif mobile pendant les mesures de handover ; et
sélectionner un faisceau de la pluralité de faisceaux pour les ressources PRACH associées à l'indication PRACH.

8. La première station de base de la revendication 7, dans laquelle la première station de base est configurée pour :
identifier un message de transfert de statut de numéro de séquence, SN, en provenance de la seconde station de base ; et
planifier les une ou plusieurs ressources PRACH immédiatement après réception du message de transfert de statut de SN.

9. La première station de base de la revendication 7, dans laquelle la première station de base est configurée pour générer un conteneur de contrôle de ressource radio, RRC, à transférer par la seconde station de base à un dispositif mobile, l'indication PRACH étant insérée dans le conteneur RRC pour faire en sorte que l'indication PRACH soit transférée avec le conteneur RRC au dispositif mobile.
